Europäisches Patentamt

European Patent Office

Office européen des brevets

(19)

(11) Publication number: **0 077 855**

**A1**

(12)

# EUROPEAN PATENT APPLICATION

(21) Application number: **81305097.8**

(22) Date of filing: **28.10.81**

(51) Int. Cl.³: **G 05 B 19/39**
**G 05 D 3/16, G 05 D 13/62**

(43) Date of publication of application:
**04.05.83 Bulletin 83/18**

(84) Designated Contracting States:
**DE FR GB**

(71) Applicant: **TOYOTA JIDOSHA KOGYO KABUSHIKI KAISHA**
**41-1, Aza Yokomichi, Oaza Nagakute**
**Nagakute-cho, Aichi-gun, Aichi-ken(JP)**

(71) Applicant: **HAGIWARA DENKI KABUSHIKI KAISHA**
**3-3, 2chome, Higashisakura Higashi-ku**
**Nagoya-shi Aichi-ken(JP)**

(72) Inventor: **Hashimoto, Toshio**
**32-141, Nomiyamacho 2-chome**
**Toyota Aichi(JP)**

(72) Inventor: **Kato, Yoshito**
**105-120, Aza-Fujizuka Ohaza-Orido**
**Nisshincho Aichi-gun Aichi(JP)**

(72) Inventor: **Katayama, Sunao**
**75-4, Aza-Nakashima Ohaza-Yazako**
**Nagakutecho Aichi-gun Aichi(JP)**

(74) Representative: **Burnside, Michael et al,**
**c/o Michael Burnside & Partners 2 Serjeants' Inn Fleet Street**
**London EC4Y 1HL(GB)**

(54) **Method of inputting positions of displacement in body moving apparatus.**

(57) A method is disclosed for inputting displacements of movable bodies into an apparatus for automatically moving movable bodies to predetermined positions. Pulse signals are generated by an encoder (200) indicative of displacement of a body to a predetermined position, a unit displacement corresponding to one pulse. These pulse signals are counted by a counter (130) and the counted value is stored in a memory (107) whereby distance data are inputted based on the counted value thus stored.

The method can be used for controlling a machine tool, such as a boring machine, milling machine or lathe, avoiding the errors consequent on manual measurement of the distance of a workpiece in the machine from a previously established reference position.

./...

FIG.2

# METHOD OF INPUTTING POSITIONS OF DISPLACEMENT

## IN BODY MOVING APPARATUS

The present invention relates to methods of inputting positions of displacement in an apparatus for moving bodies, and particularly to a method of inputting positions of displacement of a tool and a work into a memory of control means for controlling the tool and the work in a boring machine, a milling machine, a lathe or the like.

An invention as a method of detecting positions of a movable body as described in Patent Application Publication No. 96524/79 has been known.

According to this invention, in a method of detecting positions of a movable body by directly or indirectly replacing unit displacements of the movable body with digital pulse signals, a point where the movable body abuts against and press a stopper provided at a specified position within the moving scope thereof is made to be a reference position, a coincidence between a count number of the pulse signals counted from a reference number determined by the reference position and a set pulse number corresponding to a preset predetermined position is detected to detect an arrival of the movable body at the predetermined position, whereby the

- 1 -

position of the movable body is reliably detected, thereby enabling to provide a method of detecting positions of the movable body, wherein the assembling the method into a machine tool or the like is facilitated and the application of the method thereto is effected at low costs. However, here, in order to input a preset pulse number corresponding to the preset predetermined position, it has been necessary that the movable body is moved to the predetermined position, a distance from the reference position to the movable body is measured by use of slide calipers, a micrometer or a standard gauge, the data should be inputted and stored in a memory by use of a digital switch or a key board. However, according to the abovedescribed method, errors in measurement may occur, so that the operation is not correctly carried out, and moreover, the measuring work is complicated.

The present invention has been developed in view of the abovedescribed disadvantages and has as its object the provision of a method, wherein positions of displacement of a movable body can be accurately and readily inputted and stored in a memory.

Consequently, according to the present invention, a body is transferred to a predetermined position by a desirable method, the displacement of the body is replaced with pulse signals in such a manner that a unit displacement corresponds to one pulse, the resultant pulse signals are counted, and the counted value is stored in a memory so as to input displacement position.

The means for replacing the displacement with the pulse signals includes a rotary encoder for converting a rotary angle into pulses of a length and a linear encoder for converting a linear distance into pulses of a length, for example. Additionally, a counter, for example, is used for counting the pulse signals.

According to the present invention, a distance is measured by the encoder and the counter, so that the value of the counter can be stored in the memory to input the data of distance by the operation of a control key, and moreover, an accurate operation can be achieved, thus enabling to provide an inputting method applicable to various uses.

The abovementioned features and objects of the present invention will become more apparent by reference to the following description taken in conjunction with the accompanying drawings, wherein like referenced numerals denote like elements, and in which:

Fig. 1 is a block diagram showing an embodiment of a machine tool, to which is applied the method according to the present invention;

Fig. 2 is a block diagram enlargedly and schematically showing a control module 100 and a program module 150 illustrated in Fig. 1;

Fig. 3 is a block diagram schematically showing another embodiment of the present invention;

Fig. 4 is a flow chart showing the fundamental operations and procedures in the embodiment shown in Fig. 1;

Fig. 5 is a flow chart showing a control flow in the flow chart of Fig. 4;

Fig. 6 is a flow chart showing a manual operation setting flow in the flow chart of Fig. 4; and

Fig. 7 is a flow chart showing a teaching setting flow in the flow chart of Fig. 4.

Description will hereunder be given of an embodiment, in which the present invention is applied for inputting the displacement positions of a tool and a work in a machine tool.

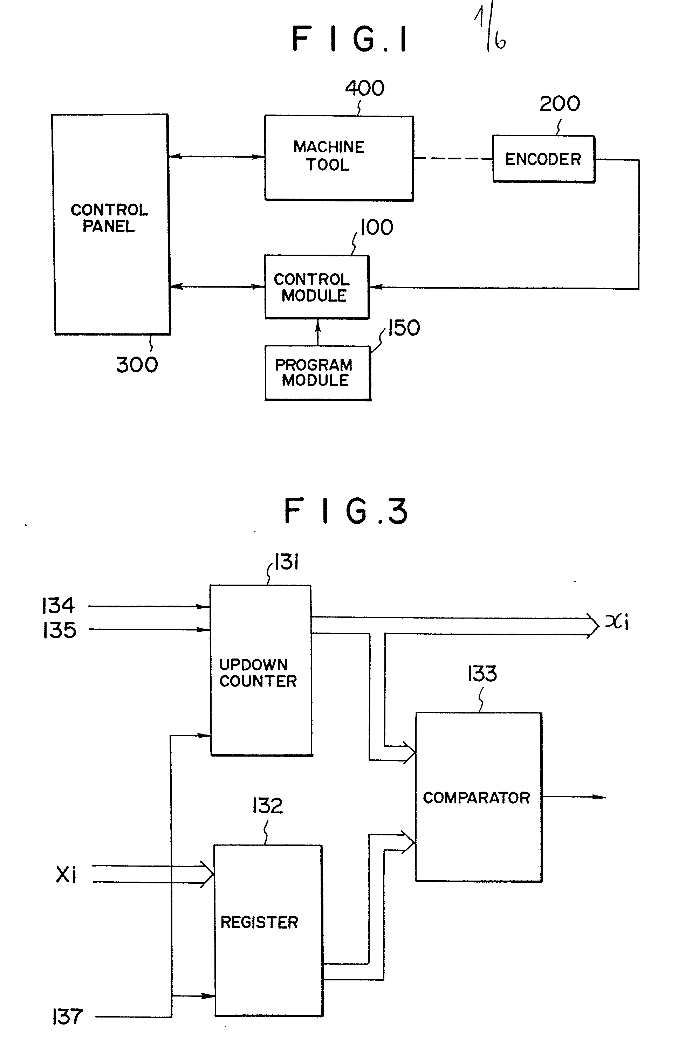

Fig. 1 is a block diagram showing an embodiment of a machine tool, to which the present invention is applied. A table for example, not shown, movably holding a work for example, not shown, in a machine tool 400 is connected thereto with an encoder 200, which is adapted to replace a displacement of the table with pulse signals in such a manner that a unit displacement corresponds to one pulse. The encoder 200 may be either a rotary encoder for converting a rotary angle into pulses of a length or a linear encoder for converting a linear distance into pulses of a length. For example, one pulse is set to 0.1 mm. Pulse signals from the encoder 200
are inputted to a control module 100, which in turn operates
in accordance with a program selected and commanded by a
program module 150. For instance, when the program module 150
commands an input of a position of the table for transferring
the tool, the control module 100 counts the pulse signals
from the encoder 200 and stores the position of the table in
a memory thereof. Furthermore, when the program module 150
commands a control of the machine tool 400, the control module
100 counts the pulse signals from the encoder 200, and, when
the counted value coincides with a signal of the table position
stored in the memory of the control module 100, the control
module 100 sends a signal to a control panel 300 to operate
a sequence circuit or the like for operating the machine
tool, so that the machine tool 400 can be controlled by the
operation of the control panel 300.

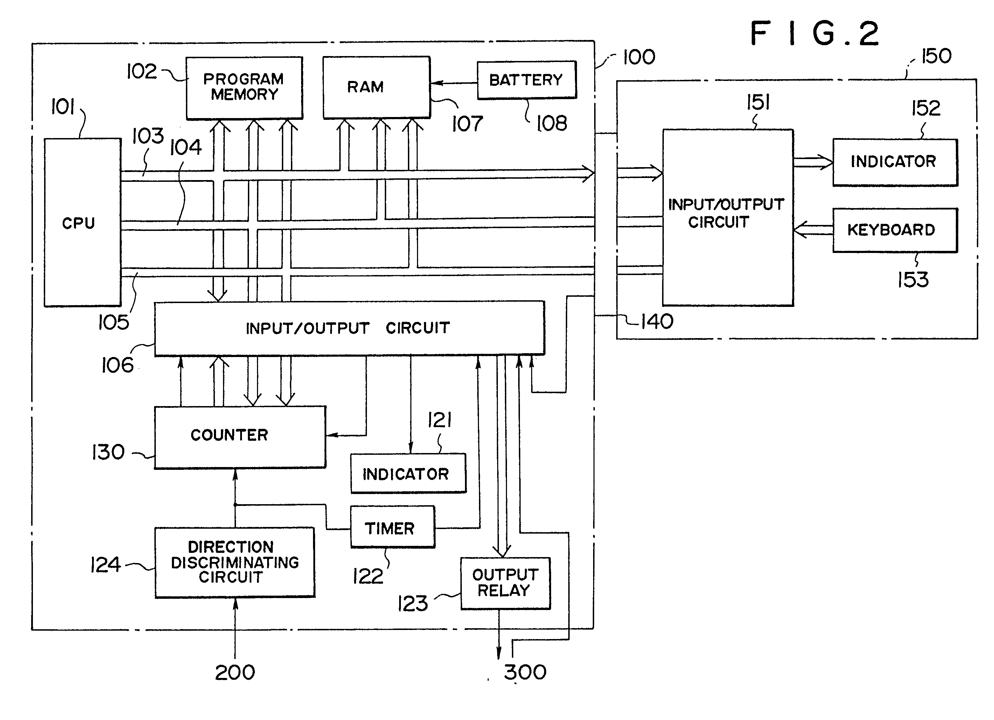

Fig. 2 is a block diagram enlargedly and schematically
showing the control module 100 and the program module 150
in Fig. 1, in which the control module 100 and the program
module 150 are detachably connected to each other through a
connector 140. The control module 100 comprises: a program
memory 102 for storing a program for controlling; a central
processing unit (hereinafter referred to briefly as "CPU")
101 for successively performing control and calculation in
accordance with the contents of the memory 102; an input/output circuit 106 for connecting CPU to outside; and a random access memory (hereinafter referred to briefly as "RAM") 107 for storing data from the program module 150, which can be varied by an user in accordance with the uses. CPU 101, the memory 102, the input/output circuit 106, RAM 107 and the connector 104 are connected to one another through an address omnibus, a control omnibus and a data omnibus 105, respectively.

RAM 107 is connected thereto with a backup battery 108, which can prevent the data stored in RAM 107 from disappearing even if a main power source is temporarily cut off. Additionally, the input/output circuit 106 is connected thereto with: a counter 130; a direction discriminating circuit 124 (publicly known by Japanese Utility Model Application Publication No. 8574/77) for discriminating the moving direction of the table based on a signal from an encoder 200 for emitting two pulse signals having a phasic difference of 90° therebetween, the two pulse signals being emitted, in the case of the reverse rotation of the encoder, in an emission order opposite to that in the case of the normal rotation of the encoder; an indicator 121 for indicating errors; a timer 122; and an output relay 123 including a semiconductor switch or relay for emitting a control output. The program module 150 comprises: an input/output circuit 151 connected thereto with a connector 140; an indicator 152 connected to the input/output circuit 151; and a keyboard 153. The keyboard
153 comprises: a mode selector key for selecting modes such
as a monitor mode, a setting mode and a teaching mode; a ten
key; and a control key for controlling the settings and
write-ins.

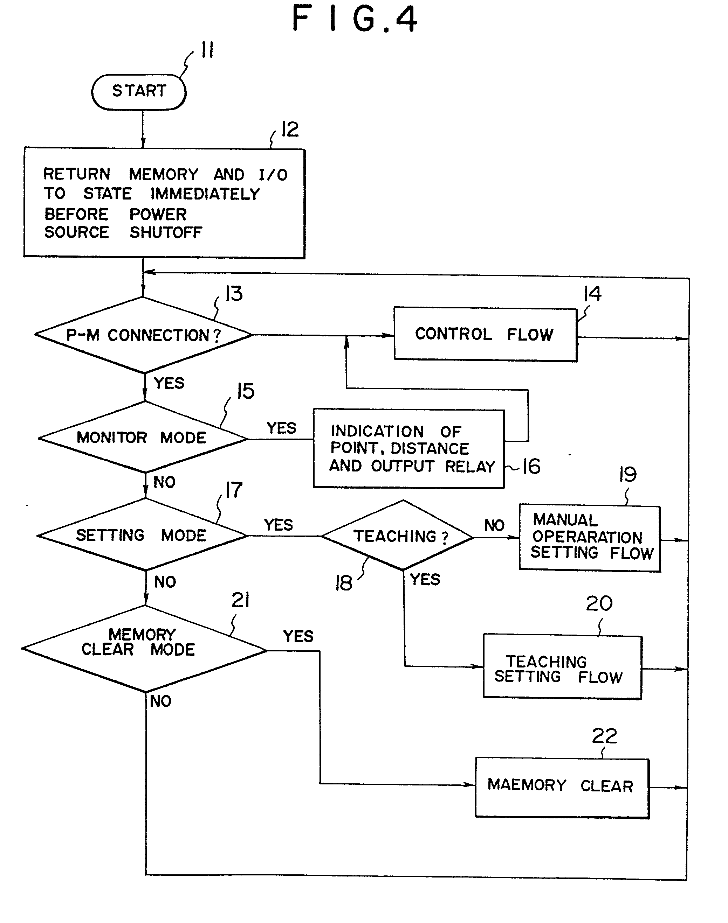

Description will now be given of action of the embodiment of the present invention explained in Figs. 1 and 2 with
reference to the flow charts shown in Figs. 4 through 7.

Fig. 4 is a flow chart showing the fundamental operations. A power source for the whole apparatus is thrown in,
CPU 101 starts its operation in Step 11 in accordance with
a program from the program memory 102, advances to Step 12,
stores data from the encoder 200 being stored in RAM 107
immediately before the power is cut off and data showing the
correspondence of the present position of the table to the
position stored and set in a data area of the program memory,
returns the memory 102 and the input/output circuit 106 to
the state immediately before the power cut, and advances to
Step 13. In Step 13, CPU 101 judges the succeeding object to
be achieved, and, when the program module (P-M) 150 is connected
to the control module 100, advances to Step 15 for judging
the presence of either the initial state where data showing
a point (a table position stored and set) and data showing
the correspondence of the point to the condition of the output
relay are not inputted or a monitor mode having data previously inputted and stored and used to monitor whether the machine tool 400 is operated in conformity with the data or not. When the control module 100 is not connected to the program module 150, CPU 101 advances to a control flow 14 where such a control is made that an output is actually fed to the control panel 300 from the output relay 123 in accordance with the operation of the machine tool 400, and loops the control flow.

Description will hereunder be given of a method of inputting setting data of the correspondence of the point to the state of the point output relay 123 when the control module 100 is connected to the program module 150.

Firstly, when the mode selector key of the keyboard 153 is selected to a memory clear mode, P-M connection takes place in Step 13, then CPU 101 passes through Steps 15 and 17, advances to Step 21 where CPU 101 selects the memory clear mode at Step 21, advances to Step 22 where CPU 101 clears a desirable data area as a whole to zero, and returns to Step 13. Subsequently, the mode selector key of the keyboard 153 is set to a setting mode, the setting mode is judged in Step 17, CPU 101 advances to Step 108, then to a manual operation flow 19, and returns to Step 13. Next, when the mode selector key of the keyboard 153 is selected to a teaching mode, CPU 101 advances from Step 13 through Steps 15 and 17 to Step 18, a teaching setting flow is performed from Steps 18 through 20, and CPU 101 returns to Step 13.

Subsequently, when the mode selector key of the keyboard 153 is switched over to a monitor mode to actually operate the machine tool 400, CPU 101 advances from Step 13 to Step 15, and further advances to Step 16 where a relay output emitted based on the correspondence of a distance from the original point to the table at this time, the preset point and the state of the output relay outputted from the correspondence of the preset point to this distance are indicated by the indicator 152 in the Step 16, and then, CPU 101 advances Step 14 to perform a control flow, and returns to Step 13.

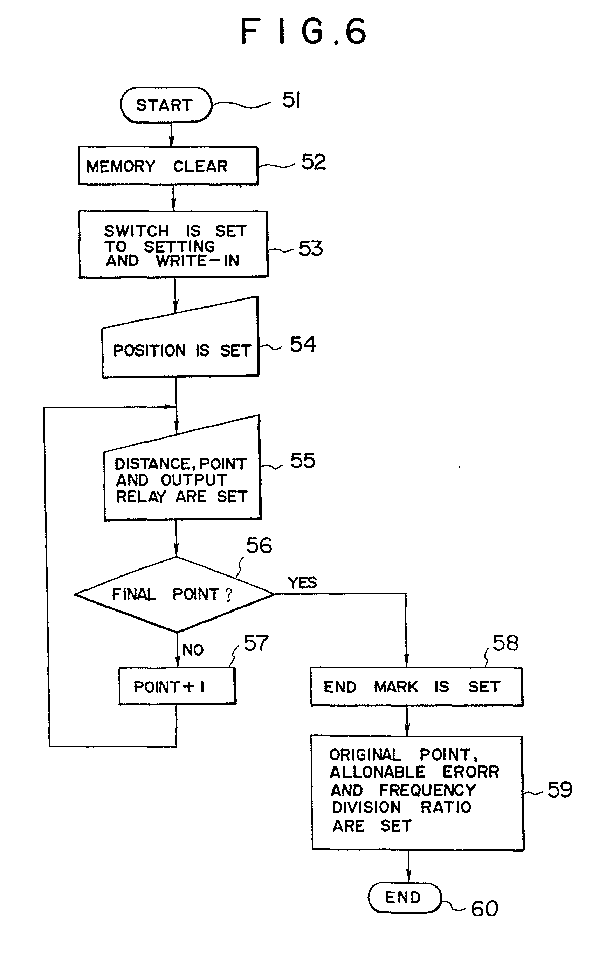

Description will now be given of the manual operation setting flow with reference to Fig. 6. CPU 101 advances from Step 18 to Step 52 to clear the memory, then, advances to Step 53, where the setting of the control key of the keyboard 153 and the write-in thereof are inputted, advances to Step 54, where a desirable point number is inputted through the ten keys of the keyboard 153 and stored in RAM 107, and advances to Step 55. In Step 55, the correspondence of the distance of the point to the state of the output relay 123 (for example, the output relay 1 is on at Point Nos. 1, 2 and 5 and off at Point Nos. 3, 4, 6 and 7) is inputted through turning ON or OFF of the ten key and the control key of the keyboard 153 and stored in RAM 107, then CPU 101 advanced to Step 56, performs Step 56, where 1 is added to the initially set Point No., then, when it is not the final point, returns to Step 55, the correspondences of the distances of the points to the states of the output relay are successively inputted, which is repeated until the final point is completed, when the final point is completed, CPU 101 advances from Step 56 to Step 58, an end mark is written in RAM 107, in Step 59, the original point, allowable errors and frequency division ratio are set, and then, CPU 101 returns to Step 13, thus completing the manual operation setting flow. In this manual operation setting flow, the relationships between Point Nos., which should necessarily be determined in the setting stage of a control sequence and outputs of the switch can be readily set, however, the distance, another factor, cannot be set in most cases until a machine tool is actually operated to move a tool or a work to a desirable position and measure the distance, and, in general, the measurement of the type described is complicated, and moreover, proves to be inaccurate in many cases.

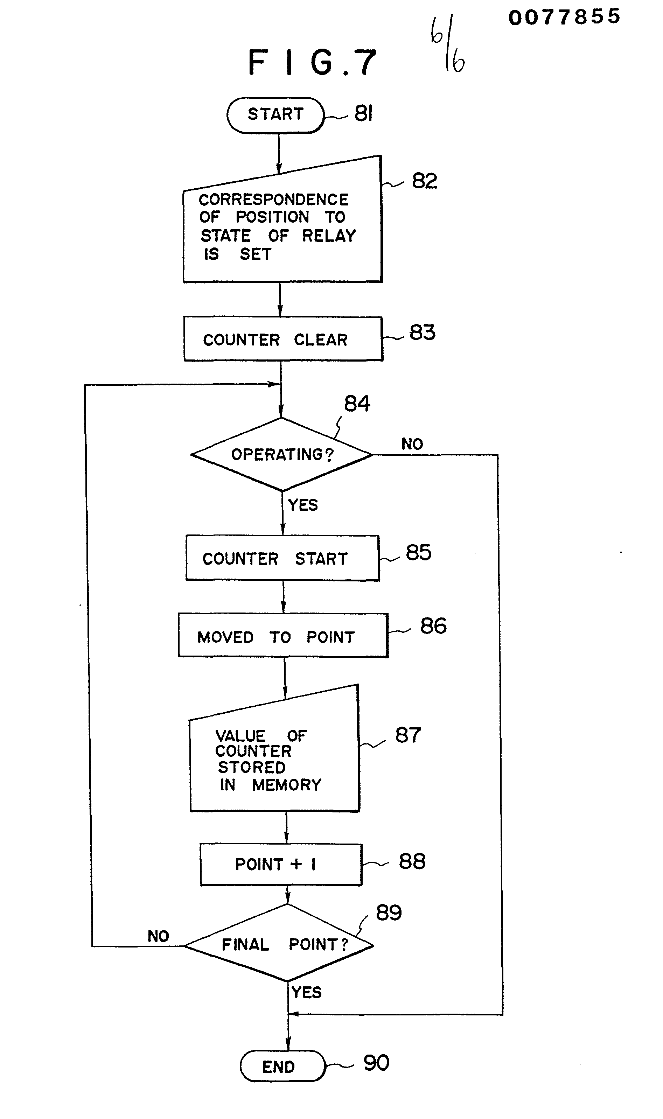

Description will hereunder be given of the teaching setting flow according to the present invention with reference to Fig. 7.

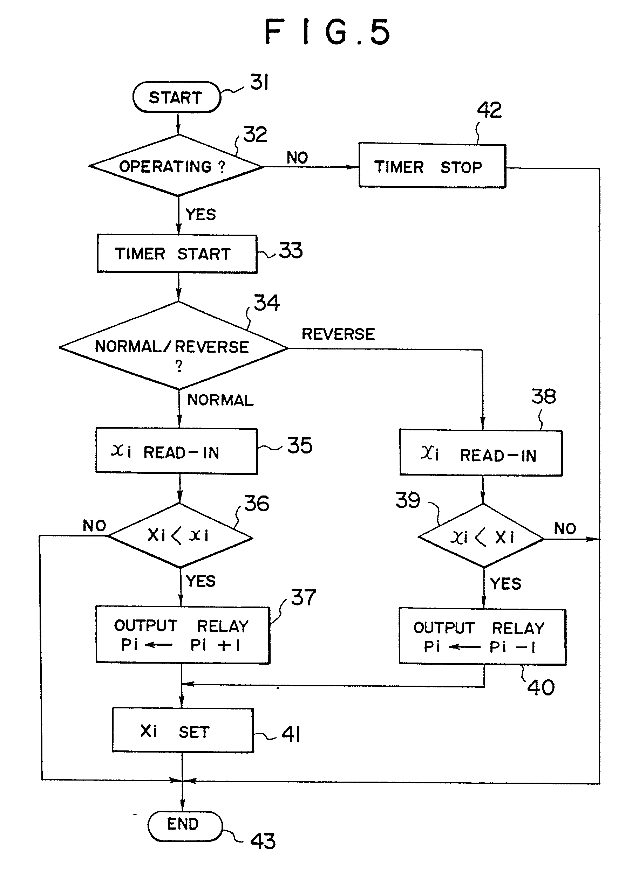

In Step 18 of the basic routine shown in Fig. 4, when the teaching mode is inputted through the mode selector key of the keyboard 153, CPU 101 advances to Step 20. In other words, CPU 101 advances to Step 82, in which, firstly, the correspondence of Point No. to the state of the output relay is inputted to be stored in RAM 107 through the control key and the ten key of the keyboard 153. At this time, data of distance is not set because it is sought through the teaching operation. Subsequently, CPU 101 advances to Step 83, where CPU 101 outputs a reset signal to clear the counter 130, then, CPU 101 advances to Step 84, where CPU 101 discriminates the presence of an operation command (in operation or stop) by a control signal, if the signal of stop is present, CPU 101 reaches Step 13 from Step 84 to repeat Step 13 until a condition of "the machine tool 400 is in operation" is brought about. When the condition is "in operation", CPU 101 advances to Step 85. When the operator moves the table, while ascertaining the positional relationship between the work and the tool, the encoder 200 outputs pulse signals in accordance with the distance of displacement, and the counter 130 counts the pulse signals. When the table reaches a desirable position, the table is stopped in displacement. Subsequently, the counted value of the counter 130 at this time (i.e. the distance up to the point intended for) is written in RAM 107 through the control key of the keyboard 153, and CPU 101 advances to the succeeding Step 88, where one point is added, and further, advances to Step 89. In Step 89, when it is not the final point, CPU 101 advances to Step 84, and the abovedescribed steps are repeated until the final point is reached. Additionally, in the final point, CPU 101 advances to Step 13, thus completing the teaching setting flow.  Finally, description will be given of the control flow with reference to Fig. 5.

Firstly, when the program module 150 is disconnected from the control module 100, Step 13 is carried out to perform the control flow of Step 14 as aforesaid.  In the first place, in Step 32, the machine tool 400 is judged whether it is in operation or at stop, when it is at stop, CPU 101 advances to 42, where the timer 122 is stopped, then returns to Step 13 to repeat the same until the condition of "the machine tool 400 is in operation" is brought about.  When the machine tool is in operation, the timer 122 for judging whether the encoder 200 is normally operated or not is started to detect the presence of an abnormality (for example, when even one pulse is not inputted for one second, the encoder 200 is out of order), and, when an abnormality is present, the error indicator 121 is operated, CPU 101 advances to Step 13 to repeat the same until the normality is present, not shown.  When the normality is present, CPU 101 advances to Step 34, where the direction discriminating circuit 124 judges whether the encoder 200 is rotated in the normal direction or in the reverse direction, and, the rotation is in the normal direction, CPU 101 advances to Step 35, where a distance output xi from the counter 130 is written in, advances to Step 36, where a distance Xi of the desirable point is compared with the aforesaid distance output xi, when the distance Xi and the distance output xi become equal in value to each other, CPU 101 advances to Step 37, where the output relay 123 is operated and one point is added to the current point Pi (i.e., Pi + 1) to obtain the succeeding point to be performed, then, CPU 101 advances to Step 41, where the distance Xi of the point Pi + 1 is set, and then advances to Step 13. In Step 36, when Xi is larger in value than xi, CPU 101 advances to Step 13 to repeat the same until xi and Xi become equal in value to each other. When the encoder 200 is rotated in the reverse direction, CPU 101 advances from Step 34 to Step 38, where the distance output xi from the counter 130 is written in, then CPU 101 advances to Step 39, where xi and Xi are equal in value to each other, CPU 101 advances to Step 40, where the output relay 123 is operated and one point is subtracted from the current point Pi (i.e., Pi - 1) to obtain the succeeding point to be performed, then, CPU 101 advances to Step 41, where the distance Xi of the point Pi - 1 is set, and further, advances to Step 13. In Step 39, when Xi is smaller in value than xi, CPU 101 advances from Step 39 to Step 13 to repeat the latter until xi and Xi become equal in value to each other.

Description has hereinabove been given of an example of using a computer. It should be understood, however, there is no intention to limit the invention to the specific embodiment disclosed, but on the contrary, the invention is to cover all modifications falling within the sprit and scope of the invention, for example, the invention can be worked by use of a counter and a comparator, which will hereunder be explained with reference to Fig. 3.

Major components in this case include an updown counter 131, a register 132 and a comparator 133. Inputted at the input side of the updown counter 131 are reset signals 137, normal rotation pulse signals 134 and reverse rotation pulse signals 135 from the encoder 200 through the direction discriminating circuit 124, while connected to the output side of the updown counter 131 are one of input terminals of the comparator 133 and a memory, not shown. Furthermore, inputted into the input side of the register 132 are a reset signal 137 similar to that in the case of the updown counter 131 and pulse signal data Xi determined in accordance with a desirable point, and the output side of the register 132 is connected to the other of the input terminals of the comparator 133. The comparator 133 compares the output xi from the updown counter 131 with the output Xi from the register 132, and, when the both output equal in value to each other, outputs an output signal.

Description will now be given of action of an embodiment shown in Fig. 3. Firstly, in the teaching mode, when the table is positioned at the original point, the reset signal 137 is inputted to the updown counter 131 to set the output to zero, and when the table is at a point other than the original point, the reset signal 137 is not inputted and the table is moved to a desirable point by a desirable method, the normal rotation pulses 134 or the reverse rotation pulses 135 are inputted to the updown counter 131. Then, the updown counter 131 counts the pulse signals from the encoder 200 outputted in accordance with the displacement distance and outputs the same as the output xi to a memory, not shown. This memory stores therein this output xi, and can automatically stop the table of the machine tool 400 at a desirable point based on this stored data in the control effected thereupon. Namely, the data stored in the memory as the desirable point is inputted to the register 132 as the data Xi, whereby the table starts moving to the preset point. During this displacement of the table, the pulse signals from the encoder 200 are upcounted or downcounted by the updown counter 131 in accordance with the normal or reverse rotation of the encoder 200, and, when the resultant output xi becomes equal to the data Xi preset by the register 132, the comparator 133 outputs an output signal, whereby this output signal is inputted to the control panel 300, so that the table can be automatically stopped at the preset point.

From the foregoing description, it should be apparent to those skilled in the art that the abovedescribed emdodiment is but one of many possible specific embodiment which can represent the applications of the principles of the present

Λ b

invention.  Numerous and varied other arrangements can be
readily devised by those skilled in the art without departing
from the spirit and scope of the invention.

- 17 -

CLAIMS:

1. A method of inputting, into an apparatus for automatically moving movable bodies to predetermined positions those positions into which the movable bodies are displaced, characterized by

(a) generating pulse signals indicative of displacement of a body to a predetermined position, in such a manner that a unit displacement corresponds to one pulse;

(b) counting said pulse signals; and

(c) storing, in a memory, the counted value of said pulse signals.

2. A method according to Claim 1 characterized in that said displacement is linear.

3. A method according to Claim 1 wherein said displacement is rotational displacement, characterized in that normal or reverse rotation pulse signals are generated corresponding to rotational movement in normal or reverse sense in such a manner that a unit displacement corresponds to one normal or reverse rotation pulse, and said normal or reverse rotation pulses are counted by an updown counter.

4. A method according to any of Claims 1 to 3 characterized by

(a) a first step comprising storing in a memory the correspondence of a predetermined number indicating a previously stored and set position of a body with a state of a control signal for controlling the body moving apparatus, the correspondence being inputted by use of a key in a keyboard;

(b) a second step comprising outputting a reset signal from a Central Processing Unit to clear a counter upon completion of said first step;

(c) a third step comprising inputting a control signal from the body moving apparatus to judge whether or not the body moving apparatus is in operation upon completion of said second step;

(d) a fourth step comprising generating and counting said pulse signals indicative of displacement when the body moving apparatus is judged to be in operation in said third step; and

(e) a fifth step comprising stopping a body at a position corresponding to the predetermined number indicating the position of the body, which has been stored in the first step, and writing the counted value at this time into a memory by use of a key in a keyboard.

5. A method according to Claim 4, further characterized by

(f) a control step of comparing a predetermined number indicating a previously stored and set position of a body with a counted value of pulse signals outputted during displacement of the body, when a control of the body moving apparatus is commanded, and outputting a signal for stopping the body moving apparatus, when the predetermined number coincides with said counted value.

6. A method according to Claim 5, further characterized by

(g) a memory clear step of clearing to zero all the predetermined data in the memory;

(h) a manual operation setting step of manually setting the correspondence of the predetermined number indicating the previously stored and set position of the body with the state of the control signal for controlling the body moving apparatus; and

(i) a monitor step of indicating a distance from the original point to the body, the predetermined number indicating the previously stored and set position of the body and a control signal outputted indicative of the correspondence of said distance with said number.

# F I G . 1

```
              ┌─────────────┐                    ┌─────────────┐
              │    400      │                    │    200      │
              │  MACHINE    │ ─ ─ ─ ─ ─ ─ ─ ─ ─ ▶│  ENCODER    │
┌──────────┐  │   TOOL      │                    └─────────────┘
│          │◀─│             │                           │
│ CONTROL  │  └─────────────┘                           │
│  PANEL   │                                            │
│          │      100                                   │
│          │  ┌─────────────┐                           │
│          │◀─│  CONTROL    │◀──────────────────────────┘
│          │─▶│  MODULE     │
└──────────┘  └─────────────┘
    300              ▲    150
                     │  ┌─────────────┐
                     └──│  PROGRAM    │
                        │  MODULE     │
                        └─────────────┘
```

# F I G . 3

```
 134 ──────────▶┌─────────────┐
 135 ──────────▶│    131      │─────────────────────────▶ xi
                │  UPDOWN     │
                │  COUNTER    │────────┐
           ┌───▶│             │        ▼
           │    └─────────────┘   ┌─────────────┐
           │                      │    133      │
           │         132          │             │──────▶
 Xi ══════╪═════▶┌─────────────┐ │ COMPARATOR  │
           │     │             │═▶│             │
           │     │  REGISTER   │  └─────────────┘
           │     │             │
 137 ──────┴────▶│             │
                 └─────────────┘
```

FIG.2

# F I G.4

START — 11

RETURN MEMORY AND I/O TO STATE IMMEDIATELY BEFORE POWER SOURCE SHUTOFF — 12

P-M CONNECTION? — 13 → CONTROL FLOW — 14

YES

MONITOR MODE — 15 → YES → INDICATION OF POINT, DISTANCE AND OUTPUT RELAY — 16

NO

SETTING MODE — 17 → YES → TEACHING? — 18 → NO → MANUAL OPERARATION SETTING FLOW — 19

YES → TEACHING SETTING FLOW — 20

NO

MEMORY CLEAR MODE — 21 → YES → MAEMORY CLEAR — 22

NO

# F I G . 5

# F I G .6

```
        ┌─────────┐
        │  START  │──── 51
        └────┬────┘
             │
    ┌────────▼────────┐
    │  MEMORY  CLEAR  │──── 52
    └────────┬────────┘
             │
    ┌────────▼────────┐
    │ SWITCH  IS  SET │
    │ TO  SETTING     │──── 53
    │ AND  WRITE-IN   │
    └────────┬────────┘
             │
    ┌────────▼─────────┐
    │                  │
    │ POSITION IS SET  │──── 54
    └────────┬─────────┘
             │
    ┌────────▼─────────┐
    │                  │
    │ DISTANCE, POINT  │──── 55
    │ AND  OUTPUT      │
    │ RELAY ARE SET    │
    └────────┬─────────┘
             │
           ◇─▼─◇
          ╱     ╲          YES
    ◇ FINAL  POINT ? ◇────────────┐
          ╲     ╱                 │
           ◇─┬─◇  56              │
             │ NO                 │
             │    57              │    58
    ┌────────▼────────┐   ┌───────▼──────────┐
    │   POINT + 1     │   │ END  MARK IS SET │
    └─────────────────┘   └───────┬──────────┘
                                  │
                          ┌───────▼──────────┐
                          │ ORIGINAL  POINT, │
                          │ ALLONABLE  ERORR │
                          │ AND  FREQUENCY   │──── 59
                          │ DIVISION  RATIO  │
                          │ ARE  SET         │
                          └───────┬──────────┘
                                  │
                          ┌───────▼──────────┐
                          │       END        │──── 60
                          └──────────────────┘
```

# F I G .7

```
        ( START )～ 81
            │
            ▼
  ┌─────────────────────┐
  │ CORRESPONDENCE      │～ 82
  │ OF  POSITION  TO    │
  │ STATE  OF  RELAY    │
  │ IS   SET            │
  └─────────────────────┘
            │
            ▼
  ┌─────────────────────┐
  │ COUNTER  CLEAR      │～ 83
  └─────────────────────┘
            │
            ▼
         ◇ OPERATING? ◇────── NO ──┐
            │ 84                     │
            │ YES                    │
            ▼                        │
  ┌─────────────────────┐           │
  │ COUNTER  START      │～ 85       │
  └─────────────────────┘           │
            │                        │
            ▼                        │
  ┌─────────────────────┐           │
  │ MOVED  TO  POINT    │～ 86       │
  └─────────────────────┘           │
            │                        │
            ▼                        │
  ┌─────────────────────┐           │
  │ VALUE  OF           │～ 87       │
  │ COUNTER             │           │
  │ STORED              │           │
  │ IN  MEMORY          │           │
  └─────────────────────┘           │
            │                        │
            ▼                        │
  ┌─────────────────────┐           │
  │ POINT + 1           │～ 88       │
  └─────────────────────┘           │
            │                        │
            ▼                        │
  NO ──◇ FINAL  POINT? ◇～ 89         │
            │ YES                    │
            ▼                        │
         ( END )～ 90  ◄─────────────┘
```

European Patent
Office

**EUROPEAN SEARCH REPORT**

| | **DOCUMENTS CONSIDERED TO BE RELEVANT** | | **CLASSIFICATION OF THE APPLICATION (Int. Cl. 3)** |
|---|---|---|---|
| Category | Citation of document with indication, where appropriate, of relevant passages | Relevant to claim | |
| Y | <u>DE - A1 - 2 753 087</u> (MASCHINENFABRIK C. ZANGS AG) <br> * claims 1, 3, 4, 6 * <br> & US - A - 4 258 636 <br> -- | 1,2 | G 05 B 19/39 <br> G 05 D 3/16 <br> G 05 D 13/62 |
| Y | <u>DE - A1 - 2 752 418</u> (SCHNEIDERWERK LÜBECK, GRAPHISCHE MASCHINEN- U. APPARA-TEBAU GMBH) <br> * claims 1, 3, 6; fig. 1 * <br> -- | 1,4,5 | |
| Y | <u>DE - A - 2 110 804</u> (TRIGA PODNIK MISTNIHO HOSPODARZSTVI HORNI POCZERNICE) <br> * page 2; fig. 1 * <br> -- | 1-3 | **TECHNICAL FIELDS SEARCHED (Int.Cl. 3)** |
| Y | <u>US - A - 3 549 870</u> (C.M. LAY) <br> * abstract; fig. 1 * <br> -- | 2,3,6i | G 05 B 19/00 <br> G 05 D 3/00 <br> G 05 D 13/00 |
| Y | <u>US - A - 4 234 833</u> (J.E.J. BARRETT) <br> * complete document * <br> -- | 3,4 | |
| Y | <u>AU - B - 502 309</u> (TAS ENGINEERING SER-VICE PTY) <br> * claim 1 * <br> -- | 6i | **CATEGORY OF CITED DOCUMENTS** |
| A | <u>US - A - 3 612 976</u> (R.W. TRIPP) <br> -- | | X: particularly relevant if taken alone <br> Y: particularly relevant if combined with another document of the same category <br> A: technological background <br> O: non-written disclosure <br> P: intermediate document <br> T: theory or principle underlying the invention <br> E: earlier patent document, but published on, or after the filing date <br> D: document cited in the application <br> L: document cited for other reasons |
| A | ELEKTRONIK, Heft No. 7, April 1981 <br> J. GUGG "Software zur Steuerung von Schritt- und Kollektormotoren" <br> pages 73 to 81 <br> ---- | | &: member of the same patent family, corresponding document |

The present search report has been drawn up for all claims

| Place of search | Date of completion of the search | Examiner |
|---|---|---|
| Berlin | 22-06-1982 | BEYER |

EPO Form 1503.1  06.78